# EUROPEAN PATENT SPECIFICATION

(11) **EP 0 694 172 B1**
(45) Date of publication and mention of the grant of the patent: **28.08.2002**
(21) Application number: 93923380.5
(22) Date of filing: 13.10.1993
(51) Int. Cl.: G02B 6/16, G02B 6/12

(54) **METHOD OF PRODUCING A BRAGG GRATING IN AN OPTICAL WAVEGUIDE**
METHODE ZUR ERZEUGUNG EINES BRAGG-GITTERS IN EINEM OPTISCHEN WELLENLEITER
PROCEDE DE FABRIQUER UN RESEAU DE DIFFRACTION DE BRAGG DANS UN GUIDE D'ONDES OPTIQUE

(30) Priority: 20.10.1992 US 963839
(43) Date of publication of application: 31.01.1996
(60) Divisional application: 01126367.0
(73) Proprietor: SNITZER, Elias, Piscataway, NJ 08854 (US); PROHASKA, John Dennis, Somerset, NJ 08873 (US)
(72) Inventor: SNITZER, Elias, Piscataway, NJ 08854 (US); PROHASKA, John Dennis, Somerset, NJ 08873 (US)
(74) Representative: de Beaumont, Michel
(86) International application number: PCT/US93/09757
(87) International publication number: WO 94/009396

(56) References cited:
- EP-A- 0 352 975
- WO-A-91/12545
- US-A- 4 974 930
- US-A- 5 066 133

## Description

### Technical Field of the Invention

The present invention relates to methods for producing a Bragg grating in a core of an optical fiber or other light conducting path and, in particular, to methods for producing index of refraction changes which can provide a periodic variation along the length of a core of an optical fiber or other light conducting path which provides a Bragg reflection grating that is reflective to light in a preselected wavelength interval while being transparent to light at other wavelengths.

### Background of the Invention

A Bragg grating could be used in Wavelength Division Multiplexing (WDM) of several different wavelength bands on the same fiber for extending the utility of fiber optics for communications over several channels. The implementation of such a WDM system requires wavelength selective reflectors, multiplexers, demultiplexers and other components in which the index of refraction of the glass can be changed in a pre-determined way in the core of a fiber or other guided wave structure and in the vicinity of the light guiding path. It may also be desired to fabricate Bragg gratings for use as strain and temperature sensors.

It is known that certain materials used to make the core of optical waveguide fibers exhibit a modification of index of refraction when exposed to radiation of an actuating frequency. In particular, it is known that vitreous silicon dioxide in which is dissolved a few mole percent of germanium dioxide exhibits an increase in index when exposed to radiation of vacuum wavelength 245 nm. For fused silica doped with germania, the principal activating wavelengths are in the region of 240 to 250 nanometers, or by the use of two photon absorption, which is a much slower process, in the region of 480 to 500 nanometers. U.S. Patent 4,474,427, issued October 2, 1984, entitled "Optical Fiber Reflective Filter," inventors K. O. Hill et al., and a publication entitled "Photosensitivity in Optical Fiber Waveguides: Application to Filter Fabrication" in Applied Physics Letters, Vol. 32, no. 10, pp. 647-649, (1978)_by K. O. Hill et al. describe a method of fabricating a Bragg filter where light from an argon ion laser at 488.0 nm was focused into an end of a fiber core. This method suffers from a disadvantage in that the Bragg grating filter wavelength cannot be adjusted independent of the actuating wavelength for producing the grating.

U.S. Patent No. 4,807,950, issued February 28, 1989, inventors Glenn et al., describes a method of fabricating a Bragg filter by side writing a grating, i.e., by splitting a temporally coherent light beam from a spectrally very narrow band laser source and interfering the two beams at the location of the fiber. This is a so-called "holographic" method because it is similar to a hologram in that two distinct beams are made to interfere. This method suffers from disadvantages in that:(a) it requires very monochromatic laser light sources that are expensive and (b) the grating is formed across the whole fiber core and not only at preselected limited sections across the core.

U.S. Patent 5,104,209, issued on April 14, 1992, entitled "Method of Creating an Index Grating in an Optical Fiber and a Mode Converter Using the Index Grating," inventors K. O. Hill, et al., describes a method of fabricating a Bragg filter by side illumination that suffers from a disadvantage in that it is not very efficient or versatile because it uses a single slit which requires multiple, successive exposures along the length of the fiber.

A publication entitled "Novel Method to Fabricate Corrugation for a (lambda)/4 - Shifted Distributed Feedback Laser Using a Grating Photomask" by M. Okai, S. Tsuji, N. Chinone, and T. Harada in Applied Physics Letters, Vol. 55, No. 5, pp. 415-417, (31 July 1989) describes a method for making gratings in a semiconductor which first requires fabrication of a transparent resin replica of a mechanically ruled grating. By illuminating at an oblique angle so that the diffracted light interferes with the zero order transmitted light, fringes are formed which produce a Bragg grating. This method suffers from disadvantages in that it is difficult to obtain good quality gratings because: (a) of the precision required for the off-axis light illumination and (b) it is difficult to obtain equal light intensities in the transmitted zero order beam and the first order diffracted beam.

In light of the above, there is a need in the art for a method of fabricating a Bragg grating filter in a core of an optical fiber or other light conducting path which overcomes the above-described disadvantages.

### Summary of the Invention

The invention is set forth by attached claim 1.

It has been discovered that by passing light from a source of the actuation frequency through a mask with periodic variation in transmission, phase, or other optical property, a diffraction pattern is formed that can be used to produce a periodic variation in index along the core of an optical waveguide fiber, and thus a Bragg grating.

### Brief Description of the Drawing

Figure 1 shows an arrangement of a mask and radiation incident thereon to produce a diffraction pattern as used in the invention.

Figure 2 shows a coordinate system that is convenient for describing the diffraction pattern.

Figures 3-9 show the intensity of radiation in the diffraction pattern.

Figures 10-13 show the average intensity of the diffraction pattern averaged in the direction of propagation.

Figure 14 shows an optical waveguide fiber with a Bragg grating made therein according to the invention.

Figure 15 shows apparatus for making the Bragg grating of Fig 14.

Figure 16 shows the mask and fiber holder of Fig 15 in detail and partly cut away.

### Detailed Description

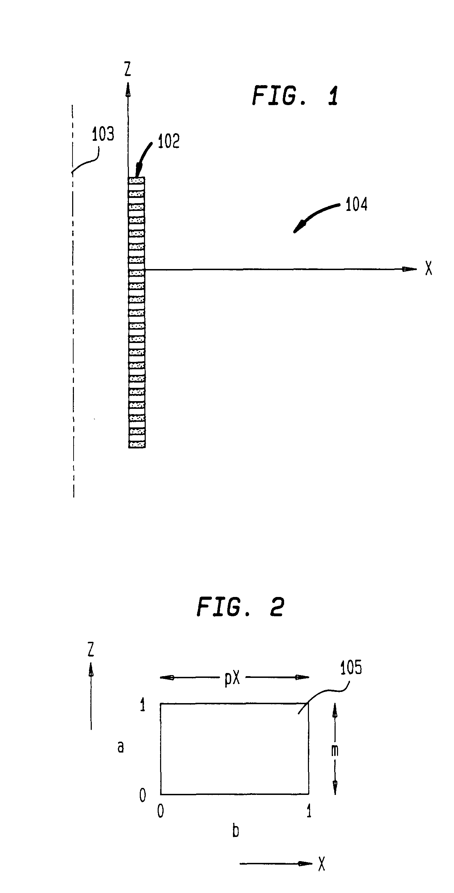

As shown in Fig 1, when a mask 102 having periodic variation in transmission with period m in what we designate the z-direction is exposed to light having a planar wave front 103 and propagating in what we designate the x-direction, a diffraction pattern is formed in the region 104 by the light passing through the mask. In the x-z plane the intensity of the diffraction pattern has a periodic variation in both the x- and z-directions, the period in the z-direction being m, and the period in the x-direction being: px = 2nm²/l, where 1 is the vacuum wavelength of the radiation and n is the index of refraction in the region of the diffraction pattern.

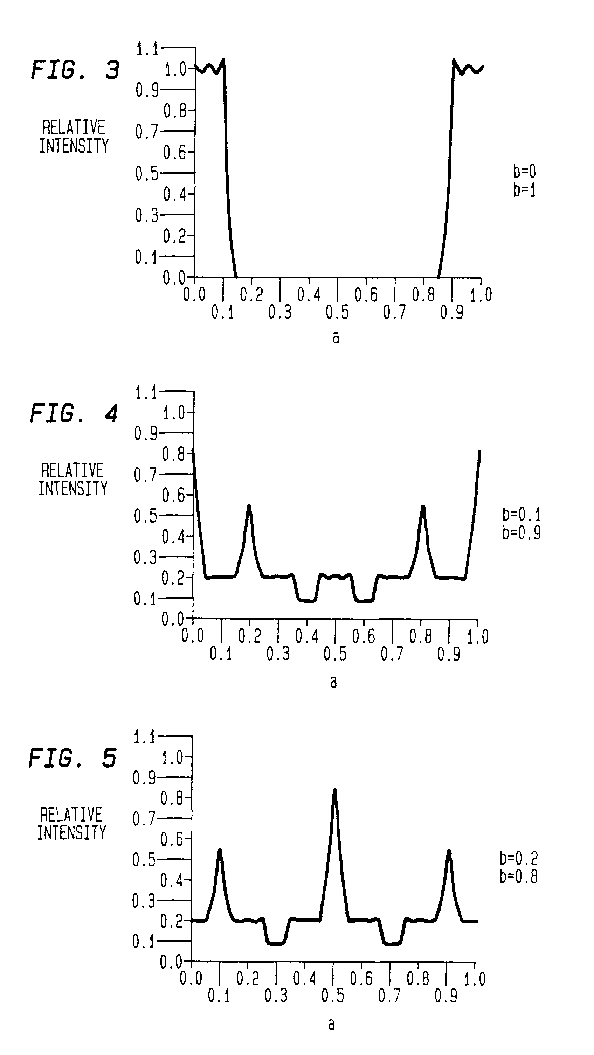

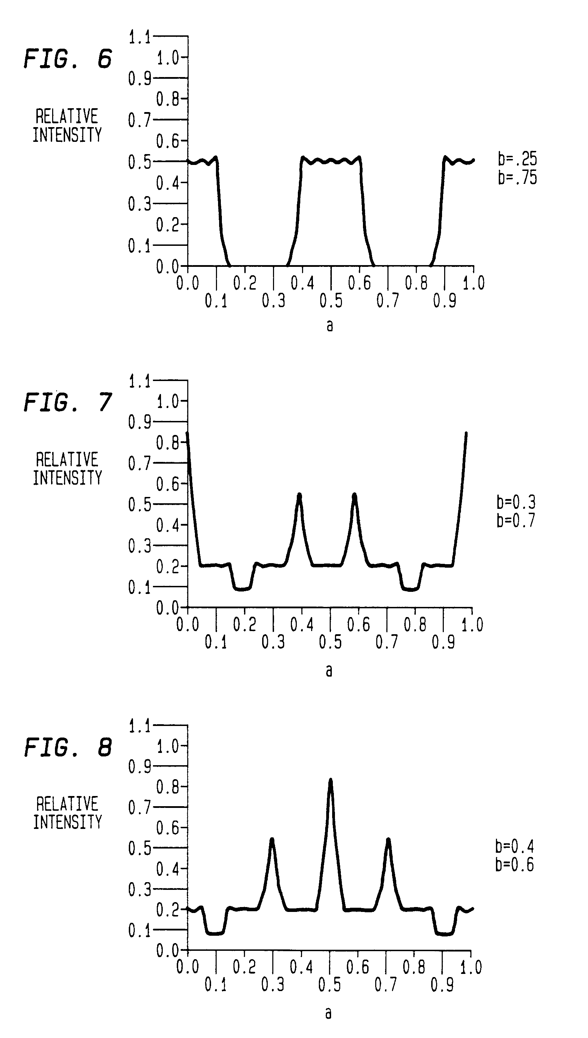

A normalized coordinate system shown in Fig 2 is convenient for displaying the diffraction pattern within a representative repeat block 105. The coordinate a is parallel to the z-direction and increases from 0 to 1 as z increases by the repeat interval m. The coordinate b is parallel to the x-direction and increases from 0 to 1 as x increases by the repeat period px. Figs 3-9 show the relative intensity of the radiation in the diffraction pattern plotted against a for several values of b. Values shown in all of Figs 3-9 are for a transmitting fraction of mask equal to 0.25.

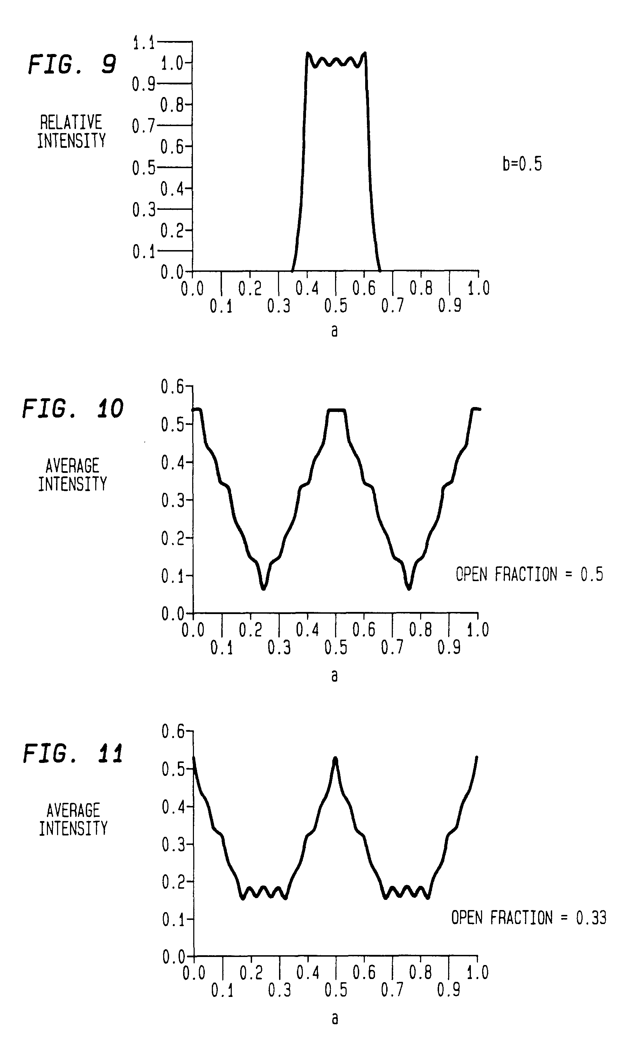

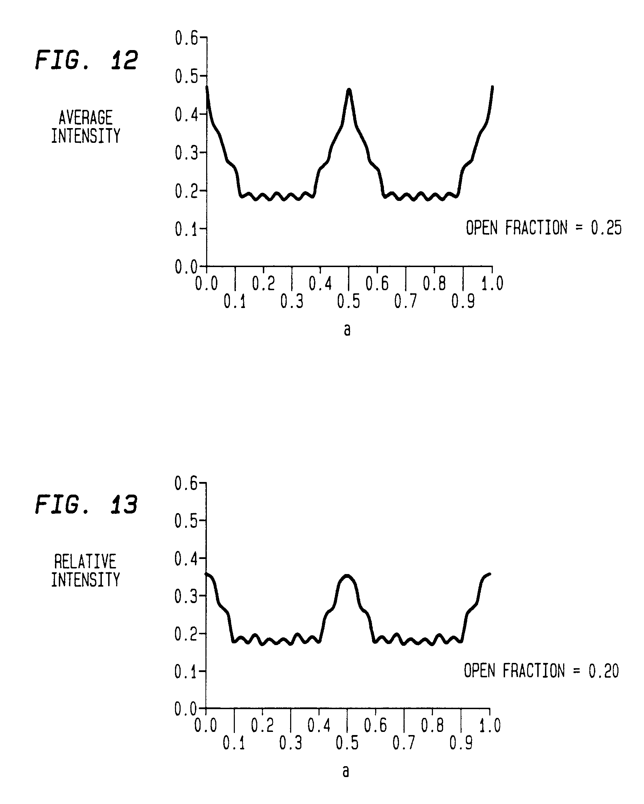

If the intensity of the diffraction pattern is integrated in the x-direction over a repeat period, (that is from b = 0 to b = 1) one gets the average intensity over a repeat period. The average depends on the value of a and the transmitting fraction of the mask. Figs 10-13 show such average intensities plotted against a for several values of the mask transmitting fraction. It may be seen that in all the illustrated instances (and it is true in general) that the average intensity is repeated in the period m so that in fact the average intensity is periodic in the z-direction with a period m/2.

In the foregoing discussion, the wavefront impinging on the mask has been supposed to be planar and to continue directly into the space of the diffraction pattern. In the more general case, curved wavefronts and lenses and mirrors positioned along the path of the mask and the diffraction space can introduce scale magnification factor. In the general case, the quantity m defining the scale of representative repeat block 105 should be interpreted as the repeat period of a projection of the mask (as projected by the radiation incident on the mask according to rules of geometric optics) onto the representative repeat block of interest. For the simple arrangement discussed above, the magnification factor is one and the period of the mask is equal to the period of its projection.

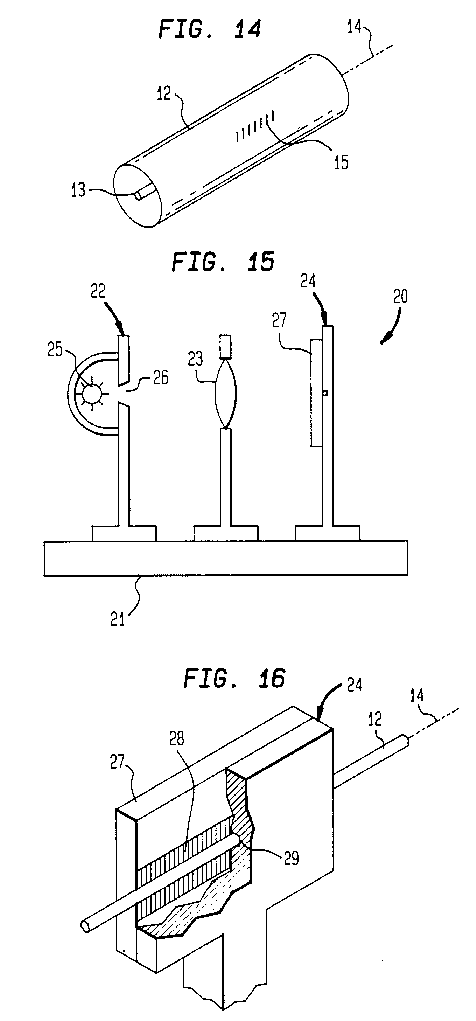

Turning now to an exemplary embodiment, optical waveguide fiber 12, as shown in Fig 14, has core 13 running along axis 14 and providing an optical path through the fiber. Core 13 is made of material exhibiting change of index when exposed to radiation of an actuating frequency. An exemplary and advantageous material is vitreous silicon dioxide in which is dissolved a few mole percent of germanium dioxide. Such material experiences a change in index when exposed to radiation of frequency of 1222 terahz. Bragg grating 15 is formed in core 13 by periodic variation in index along core axis 14, according to the invention.

Apparatus 20 as shown in Fig 15 is used to make a grating 15 according to the invention. Apparatus 20 includes base structure 21 to which is affixed radiation source 22, collimating lens 23, and mask and fiber holder 24. Radiation source 22 includes lamp 25 emitting radiation at the actuating frequency of 1222 terahz supported behind pinhole 26. Holder 24, as shown in more detail in Fig 16, includes transparent mask support 27 supporting mask 28 which has a periodically repeated variation in transmission in an extended direction perpendicular to the sheet as drawn in Fig 15. Holder 24 also has a channel 29 which holds fiber 12 in place against mask 28 with the fiber axis 14 running parallel to the extended dimension of the mask. In particular, the period of the variation of the mask transmission is 2 times the desired period in index variation in the Bragg grating.

In operation, a fiber containing a waveguide core made of germanium doped silicon dioxide is introduced into channel 29 and held in position against mask 28. Lamp 25 is actuated and provides a source emanate from pinhole 26. Radiation from pinhole 26 passes through collimating lens 23 where it is formed into a beam with a planar wavefront, which passes through mask support 27 and impinges with uniform wave phase on mask 28. On passing through mask 28 the radiation forms a diffraction pattern as described above. The core 13, which is positioned in the diffraction field is exposed to radiation periodically varying along axis 14, the period being one half that of the mask. Upon exposure to the radiation, the core develops a pattern of index variation along its length corresponding to the variation of radiation exposure. When the exposure of the fiber core to the radiation has proceeded to produce a sensible variation of index, the exposure is terminated and the fiber removed from the apparatus to provide a Bragg grating.

It may be noted that the period of the diffraction pattern in the direction of the light path (the z-direction in Fig 2) depends on the mask period and any magnification introduced by optical elements but is independent of the wavelength of the activating radiation. Thus in making a grating by the method of the invention, the period of the grating can be made whatever one wishes without any constraint arising from the wavelength of the activating radiation.

A finite bandwidth of the source or a motion of the fiber relative to the mask smears out the diffraction pattern in the x-direction but not in the z-direction.

It is to be appreciated and understood that the specific embodiments of the invention described hereinbefore are merely illustrative of the general principles of the invention. Various modifications may be made by those skilled in the art consistent with the principles set forth hereinbefore and without departing from the scope of the appended claims.

## Claims

1. A method for making a Bragg grating with a periodic variation in index equal to a desired grating period, in an optical waveguide having an extended dimension and being composed of material exhibiting change in index when exposed to radiation of an actuating frequency, including the following steps:
providing a mask having periodic variation in transmissivity/phase along a selected dimension, said mask periodic variation having a predetermined repeat period,
directing radiation of said actuating frequency through said mask so that it produces a radiation diffraction pattern varying in two dimensions and so that it passes into said waveguide,
positioning said mask near said optical waveguide with said selected dimension running parallel to said extended dimension, at a position where the diffraction pattern has an average intensity with a period of half said predetermined repeat period, and
maintaining the radiation of the actuating frequency so directed until a detectable variation in the index of said waveguide develops.

2. The method of claim 1, wherein said radiation of said actuating frequency has a wavefront contacting said mask at uniform phase.

3. The method of claim 1, wherein said waveguide is a core of an optical fiber.

4. The method of claim 1, wherein said actuating frequency is an highly monochromatic radiation.

## Patentansprüche

1. Verfahren zum Herstellen eines Bragg-Gitters mit einer periodischen Änderung des Index, die gleich einer gewünschten Gitterperiode ist, in einem optischen Wellenleiter mit einer Längen-Dimension, der aus einem Material aufgebaut ist, das eine Indexänderung aufweist, wenn es einer Strahlung mit einer Stellfrequenz ausgesetzt ist, mit folgenden Verfahrensschritten:
Vorsehen einer Maske mit einer periodischen Änderung der Durchlässigkeit/Phase entlang einer ausgewählten Dimension, wobei die periodische Maskenänderung eine vorgegebene Wiederholungsperiode aufweist,
Lenken von Strahlung mit der Stellfrequenz durch die Maske, so daß sie ein Strahlungsbeugungsmuster erzeugt, das sich in zwei Dimensionen ändert, und so daß sie in den Wellenleiter geht,
Positionieren der Maske in der Nähe des optischen Wellenleiters, wobei die ausgewählte Dimension parallel zu der Längen-Dimension läuft, bei einer Position, bei der das Beugungsmuster eine mittlere Intensität mit einer Periode, die gleich die halbe vorgegebene Wiederholungsperiode ist, aufweist, und
Aufrechterhalten der so gerichteten Strahlung mit der Stellfrequenz, bis sich eine erfaßbare Änderung des Index des Wellenleiters entwickelt.

2. Verfahren nach Anspruch 1, wobei die Strahlung mit der Stellfrequenz eine Wellenfront aufweist, welche die Maske mit gleichmäßiger Phase kontaktiert.

3. Verfahren nach Anspruch 1, wobei der Wellenleiter ein Kern einer Lichtleitfaser ist.

4. Verfahren nach Anspruch 1, wobei die Stellfrequenz eine hochmonochrome Strahlung ist.

## Revendications

1. Procédé de formation d'un réseau de Bragg avec une variation d'indice périodique égale à la période souhaitée du réseau, dans un guide d'ondes optique ayant une dimension allongée et étant composé d'un matériau présentant un changement d'indice lorsqu'il est exposé à un rayonnement d'une fréquence d'activation, comprenant les étapes consistant à:
prévoir un masque ayant une variation périodique en transmissivité/phase le long d'une dimension sélectionnée, la variation périodique du masque ayant une période de répétition prédéterminée,
diriger le rayonnement à la fréquence d'activation à travers ledit masque pour qu'il produise un motif de diffraction de rayonnement variant dans deux dimensions et pour qu'il passe dans ledit guide d'ondes,
positionner le masque près du guide d'ondes optique, la dimension sélectionnée s'étendant parallèlement à la direction allongée, en une position où le motif de diffraction présente une intensité moyenne avec une période de la moitié de la période de répétition prédéterminée, et
maintenir le rayonnement à la fréquence d'activation orienté de cette façon jusqu'à l'apparition d'une variation détectable de l'indice du guide d'ondes.

2. Procédé selon la revendication 1, dans lequel le rayonnement à la fréquence d'activation présente un front d'ondes atteignant le masque avec une phase uniforme.

3. Procédé selon la revendication 1, dans lequel le guide d'ondes est le coeur d'une fibre optique.

4. Procédé selon la revendication 1, dans lequel la fréquence d'activation est un rayonnement fortement monochrome.
